(19) Europäisches Patentamt
European Patent Office
Office européen des brevets

(11) **EP 4 664 901 A1**

(12) **DEMANDE DE BREVET EUROPEEN**

(43) Date de publication:
**17.12.2025 Bulletin 2025/51**

(21) Numéro de dépôt: **25182181.5**

(22) Date de dépôt: **11.06.2025**

(51) Classification Internationale des Brevets (IPC):
**H04N 21/439** *(2011.01)* **H04N 21/442** *(2011.01)*
**H04N 21/443** *(2011.01)* **H04N 21/485** *(2011.01)*
**H04N 21/44** *(2011.01)*

(52) Classification Coopérative des Brevets (CPC):
**H04N 21/4394; H04N 21/4424; H04N 21/4436;**
**H04N 21/4852;** H04N 21/44008; H04N 21/44213

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH LA MA MD TN**

(30) Priorité: **12.06.2024 FR 2406241**

(71) Demandeur: **SAGEMCOM BROADBAND SAS**
**92270 Bois-Colombes (FR)**

(72) Inventeurs:
• **OBEID, Jad Abdul Rahman**
**92270 BOIS-COLOMBES (FR)**
• **SCHOTT, Vincent**
**92270 BOIS-COLOMBES (FR)**

(74) Mandataire: **Cabinet Boettcher**
**5, rue de Vienne**
**75008 Paris (FR)**

(54) **CONTRÔLE DU PARAMÉTRAGE AUDIO D'UN BOITIER DÉCODEUR**

(57) Boîtier décodeur (1) comprenant :
- un module de paramétrage (11) agencé pour définir un genre du flux d'entrée, qui est associé à des paramètres audio ;
- un module de configuration (10) agencé pour adapter dynamiquement, en utilisant les paramètres audio, un réglage d'un dispositif de restitution audio de manière à optimiser un rendu sonore dudit dispositif de restitution audio en fonction du genre du flux d'entrée ;
- un module de contrôle (12), agencé pour détecter une survenue d'un évènement courant parmi un ensemble d'évènements prédéfinis, relatifs à la diffusion du flux d'entrée, et pour contrôler le module de paramétrage en fonction dudit évènement courant de manière à optimiser une utilisation de ressources du module de paramétrage (11) et donc du boîtier décodeur (1).

**Fig. 1**

EP 4 664 901 A1

**Description**

L'invention concerne le domaine des boîtiers décodeurs.

ARRIERE PLAN

Un système multimédia domestique comporte classiquement un boîtier décodeur (ou STB, pour *Set-Top Box*), un téléviseur connecté au boîtier décodeur par une liaison HDMI (pour *High Definition Multimedia Interface*), et éventuellement des équipements de restitution audio additionnels, tels que des enceintes satellites, une barre de son, un caisson de basse, un casque audio, etc. Ces équipements de restitution audio additionnels peuvent être connectés au boîtier décodeur par des moyens de communication filaires ou sans fil (par exemple *Bluetooth* ou *Wi-Fi* - marques déposées).

Certains boîtiers décodeurs récents sont en outre enrichis de fonctions audio avancées, avec par exemple des capacités de restitution audio. Ces boîtiers décodeurs intègrent ainsi un ou des haut-parleurs. On connaît par exemple un boîtier décodeur intégrant plusieurs haut-parleurs « *midrange* » (appelés aussi « médium » ou « médial ») et un haut-parleur de graves (appelé aussi « *boomer* » ou « *woofer* »).

Dans un système audio, l'utilisation de plusieurs dispositifs de restitution audio améliore la qualité du rendu sonore en permettant une restitution multicanale qui utilise les positions relatives des différents dispositifs et leurs caractéristiques audio particulières.

Le boîtier décodeur reçoit un flux audio-vidéo d'entrée, qui est par exemple un flux externe provenant d'une source externe : réseau local, satellite, câble, DVB-T (pour *Digital Video Broadcasting-Terrestrial*), xDSL (qui peut s'interpréter par « ligne d'accès numérique »), etc. Le flux audio-vidéo d'entrée est par exemple transmis au boîtier décodeur par une passerelle. Le flux audio-vidéo d'entrée peut aussi être un flux interne provenant d'une source interne au boîtier décodeur, par exemple d'un disque dur de type HDD (pour *Hard Disk Drive*).

Le flux audio-vidéo d'entrée comprend un signal vidéo d'entrée et un signal audio d'entrée.

Le boîtier décodeur diffuse le signal vidéo d'entrée en le transmettant (après décodage et traitements adaptés) au téléviseur. Le boîtier décodeur diffuse le signal audio d'entrée après décodage et traitements en le transmettant à ses propres haut-parleurs s'il en est muni, ou bien aux haut-parleurs du téléviseurs, et éventuellement aux autres équipements de restitution audio du système audio.

On cherche à optimiser le rendu sonore du système audio intégrant le boîtier décodeur et, notamment, à optimiser le rendu sonore en fonction du flux audio-vidéo diffusé. En optimisant la qualité du rendu sonore en fonction du contenu diffusé, on améliore très significativement l'expérience utilisateur.

On connaît des équipements de restitution audio, et notamment des barres de son, qui proposent plusieurs modes « audio ». L'utilisateur peut ainsi, en sélectionnant un mode audio particulier, adapter certains paramètres de la chaîne de restitution audio au contenu diffusé.

Ce système présente deux inconvénients principaux.

Tout d'abord, il nécessite une intervention manuelle de l'utilisateur, ce qui, d'une part, est relativement contraignant, et d'autre part, peut rebuter certains utilisateurs non « chevronnés » qui peuvent être réticents à l'idée d'effectuer leurs propres réglages.

De plus, ce système s'avère finalement assez peu fiable et pas toujours adapté au flux diffusé.

On envisage donc de concevoir un boîtier décodeur capable d'optimiser automatiquement et donc sans intervention de l'utilisateur le rendu sonore en fonction du flux audio-vidéo diffusé. L'adaptation de la sortie audio au flux diffusé doit être rapide et fiable. Cependant, cette fonctionnalité implique la réalisation d'analyses sur le flux diffusé, qui sont potentiellement très consommatrices de ressources du boîtier décodeur. Cette utilisation importante de ressources augmente la consommation électrique du boîtier décodeur et réduit la disponibilité de ces ressources pour d'autres tâches.

OBJET

L'invention a pour objet d'optimiser l'utilisation des ressources d'un boîtier décodeur muni d'une fonctionnalité qui vise à adapter le rendu sonore au flux audio-vidéo diffusé.

RESUME

En vue de la réalisation de ce but, on propose un boîtier décodeur, agencé pour diffuser un flux d'entrée comprenant un signal audio d'entrée, le boîtier décodeur comportant une unité de traitement dans laquelle sont mis en œuvre :

- un module de paramétrage agencé pour réaliser en temps réel des analyses sur au moins une source de données relative au flux d'entrée, de manière à définir un genre du flux d'entrée, qui est associé à des paramètres audio ;
- un module de configuration, agencé pour adapter dynamiquement, en utilisant les paramètres audio, un réglage d'au moins un dispositif de restitution audio intégré dans ou connecté au boîtier décodeur et comprenant au moins un haut-parleur, de manière à optimiser un rendu sonore dudit dispositif de restitution audio en fonction du genre du flux d'entrée ;
- un module de contrôle, agencé pour détecter une survenue d'au moins un évènement courant parmi un ensemble d'évènements prédéfinis, relatifs à la diffusion du flux d'entrée, et pour contrôler le module de paramétrage en fonction dudit évènement courant de manière à optimiser une utilisation de ressources du module de paramétrage et donc du boîtier décodeur.

Le module de paramétrage analyse donc le flux audio-vidéo d'entrée pour adapter le rendu sonore au genre du flux diffusé. Or, les besoins du module de paramétrage, en matière de ressources matérielles, diffèrent selon l'état de la diffusion du flux.

Le module de contrôle surveille donc des sources d'informations accessibles par le boîtier décodeur et détecte des évènements relatifs à la diffusion du flux (par exemple le démarrage ou l'arrêt de la lecture, ou bien la mise en pause), et contrôle le module de paramétrage de manière à optimiser l'utilisation des ressources.

On propose de plus un boîtier décodeur tel que précédemment décrit, dans lequel, pour optimiser l'utilisation des ressources du module de paramétrage, le module de contrôle est agencé pour contrôler une fréquence des analyses réalisées par le module de paramétrage.

On propose de plus un boîtier décodeur tel que précédemment décrit, dans lequel le module de paramétrage est agencé pour exécuter des inférences d'au moins un modèle de classification, et dans lequel la fréquence des analyses est une fréquence d'exécution desdites inférences.

On propose de plus un boîtier décodeur tel que précédemment décrit, dans lequel, pour optimiser l'utilisation des ressources du module de paramétrage, le module de contrôle est agencé pour contrôler un taux d'utilisation d'un processeur de l'unité de traitement, dans lequel est mis en œuvre le module de paramétrage.

On propose de plus un boîtier décodeur tel que précédemment décrit, dans lequel l'ensemble d'évènements prédéfinis comprend au moins :

- une première transition, d'un état actif ou d'activation du flux d'entrée, vers un état inactif ou de désactivation, et/ou
- une deuxième transition, d'un état inactif ou de désactivation du flux d'entrée, vers un état actif ou d'activation, et/ou
- une troisième transition, d'un premier état actif, dans lequel le flux d'entrée contient un premier programme diffusé, à un deuxième état actif, dans lequel le flux d'entrée contient un deuxième programme diffusé.

On propose de plus un boîtier décodeur tel que précédemment décrit, dans lequel le module de contrôle est agencé pour réduire la fréquence des analyses réalisées par le module de paramétrage lorsque survient la première transition, et pour augmenter ladite fréquence lorsque survient la deuxième transition ou la troisième transition.

On propose de plus un boîtier décodeur tel que précédemment décrit, dans lequel le module de contrôle stoppe les analyses lorsque le flux d'entrée passe dans l'état inactif.

On propose de plus un boîtier décodeur tel que précédemment décrit, dans lequel le module de contrôle est agencé pour réduire une consigne du taux d'utilisation du processeur lorsque survient la première transition, et pour augmenter ladite consigne lorsque survient la deuxième transition ou la troisième transition.

On propose de plus un boîtier décodeur tel que précédemment décrit, dans lequel le module de contrôle confère une valeur nulle à ladite consigne lorsque le flux d'entrée passe dans l'état inactif.

On propose de plus un boîtier décodeur tel que précédemment décrit, dans lequel le module de contrôle est aussi agencé pour contrôler le module de paramétrage, de manière à optimiser une utilisation des ressources du module de paramétrage et donc du boîtier décodeur, en fonction d'une convergence ou d'une divergence des analyses réalisées par le module de paramétrage.

On propose de plus un boîtier décodeur tel que précédemment décrit, dans lequel, pour détecter la survenue de l'évènement courant, le module de contrôle est agencé pour surveiller au moins une source d'informations, parmi un ensemble de sources d'informations prédéfinies comprenant un agrégateur de sessions média d'un système d'exploitation du boîtier décodeur, et/ou un guide électronique des programmes, et/ou un pilote audio et/ou un pilote vidéo du boîtier décodeur.

On propose de plus un boîtier décodeur tel que précédemment décrit, dans lequel le module de contrôle sélectionne au moins une source d'informations, pour détecter la survenue de l'évènement courant, en fonction d'une source du flux d'entrée.

On propose de plus un procédé de contrôle, mis en œuvre dans le module de contrôle de l'unité de traitement du boîtier décodeur tel que précédemment décrit, et comprenant les étapes de détecter une survenue d'au moins un évènement courant parmi un ensemble d'évènements prédéfinis, relatifs à la diffusion du flux d'entrée, et de contrôler le module de paramétrage en fonction dudit évènement courant de manière à optimiser une utilisation de ressources du module de paramétrage et donc du boîtier décodeur.

On propose de plus un programme d'ordinateur comprenant des instructions qui conduisent le module de contrôle de l'unité de traitement du boîtier décodeur tel que précédemment décrit à exécuter les étapes du procédé de contrôle tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés parmi lesquels :

[Fig. 1] la figure 1 représente un boîtier décodeur et un téléviseur ;
[Fig. 2] la figure 2 représente l'ensemble de sources d'informations, le module de contrôle, l'ensemble de sources de données, le module de paramétrage et le module de configuration ;
[Fig. 3] la figure 3 représente le module de paramétrage selon un mode de réalisation ;
[Fig. 4] la figure 4 représente des sous-modules du module de contrôle selon un mode de réalisation ;
[Fig. 5] la figure 5 représente les interactions, selon un mode de réalisation, entre l'ensemble de sources d'informations, le module de contrôle et le module de paramétrage ;
[Fig. 6] la figure 6 représente des étapes d'un procédé mis en œuvre par le module de contrôle pour décider si un flux a été lancé ou arrêté ;
[Fig. 7] la figure 7 représente des étapes d'un procédé de prise de décision mis en œuvre dans le module de contrôle ;
[Fig. 8] la figure 8 représente les analyses réalisées et/ou pilotées par le module de paramétrage ;
[Fig. 9] la figure 9 représente des étapes de la première analyse, et des sous-modules réalisant lesdites étapes ; [Fig. 10] la figure 10 est un tableau qui représente un exemple de résultat de la première analyse ;
[Fig. 11] la figure 11 représente des étapes de la deuxième analyse, et des sous-modules réalisant lesdites étapes ;
[Fig. 12] la figure 12 est un tableau qui représente un exemple de résultat de la deuxième analyse ;
[Fig. 13] la figure 13 représente des étapes de la troisième analyse, et des sous-modules réalisant lesdites étapes ;
[Fig. 14] la figure 14 est un tableau qui représente un exemple de résultat de la troisième analyse ;
[Fig. 15] la figure 15 représente le procédé pour déterminer les estimations du genre à partir des estimations préliminaires.

DESCRIPTION DETAILLEE

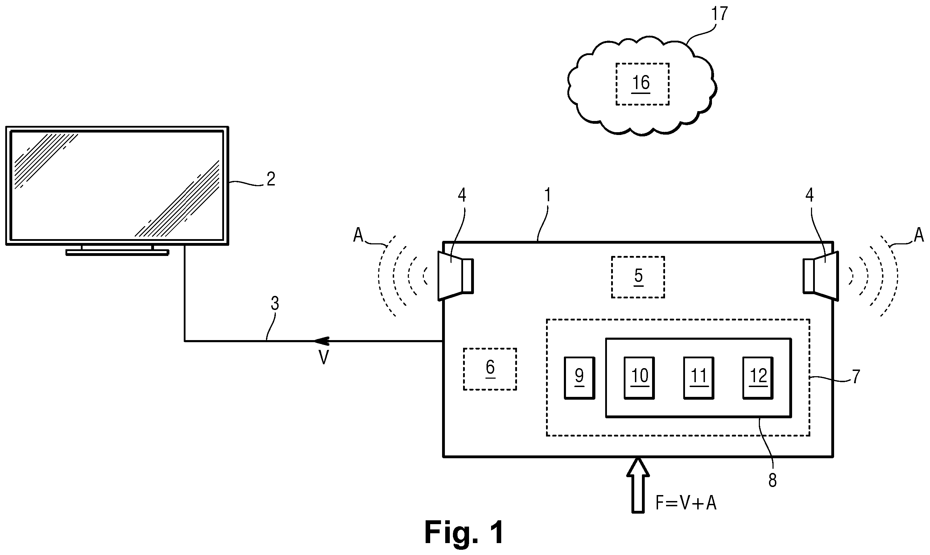

En référence à la figure 1, le boîtier décodeur 1 est ici connecté à un téléviseur 2 par une liaison HDMI 3.

Le boîtier décodeur 1 intègre un dispositif de restitution audio qui comprend au moins un, ici deux haut-parleurs 4. Le boîtier décodeur 1 comprend aussi des composants audio 5, qui permettent de mettre en forme des signaux audio numériques, de les transformer en signaux audio analogiques, et d'appliquer ces signaux audio analogiques en entrée des haut-parleurs 4.

Le boîtier décodeur 1 comprend des moyens de communication 6 qui lui permettent de communiquer avec d'autres équipements de l'installation multimédia dans laquelle est intégré le boîtier décodeur 1 : téléviseur 2, passerelle, enceintes satellites, etc. Les moyens de communication 6 permettent en particulier au boîtier décodeur 1 de communiquer avec un ou des serveurs distants 16 sur un réseau tel qu'un *cloud* 17.

Le boîtier décodeur 1 diffuse un flux d'entrée F.

Le flux d'entrée F peut être un flux externe provenant d'une source externe au boîtier décodeur 1, que le boîtier décodeur 1 reçoit grâce aux moyens de communication 6. Le flux d'entrée F peut aussi être un flux entrant interne provenant d'une source interne au boîtier décodeur 1. Des exemples connus de sources externes et internes ont été cités plus tôt.

Le flux d'entrée F est ici un flux audio-vidéo (mais cela n'est pas obligatoire : il pourrait s'agir d'un flux uniquement audio). Ici, par « flux audio-vidéo », on entend tout signal comprenant au moins un signal vidéo et au moins un signal audio associé au signal vidéo, les signaux étant destinés à être diffusés de manière synchronisée. Le flux audio-vidéo d'entrée comprend donc un signal vidéo d'entrée V et un signal audio d'entrée A. Un « flux audio-vidéo », tel qu'on l'entend ici, peut donc correspondre aux objets pouvant être désignés par l'homme du métier par les termes média, flux, flux multimédia, contenu multimédia, etc.

Le boîtier décodeur 1 intègre de plus une unité de traitement 7.

L'unité de traitement 7 est une unité électronique et logicielle. L'unité de traitement 7 comprend au moins un composant de traitement 8, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*) .

L'unité de traitement 7 comprend aussi une ou des mémoires 9, reliées à ou intégrées dans le ou les composants de traitement. Au moins l'une de ces mémoires 9 forme un support d'enregistrement lisible par ordinateur, sur lequel est enregistré au moins un programme d'ordinateur comprenant des instructions qui conduisent l'unité de traitement 7 à exécuter au moins certaines des étapes des procédés de paramétrage et de contrôle qui vont être décrits.

L'unité de traitement 7 réalise toutes les fonctions d'un boîtier décodeur classique : acquisition du flux audio-vidéo d'entrée, décodage du signal audio d'entrée et du signal vidéo d'entrée, traitements, codage, transmission au téléviseur et au(x) dispositif(s) de restitution audio, etc.

L'unité de traitement 7 coopère avec les composants audio 5 du dispositif de restitution audio pour diffuser le signal audio d'entrée. Ce sont donc ici les haut-parleurs 4 du boîtier décodeur 1 qui restituent le signal audio d'entrée A du flux audio-vidéo d'entrée F dont le signal vidéo d'entrée V est restitué par le téléviseur 2. Le signal audio d'entrée A peut être un signal audio multicanal. L'unité de traitement 7 peut gérer la diffusion multicanale et la synchronisation avec le téléviseur 2. Le signal audio multicanal peut intégrer au moins un canal audio de plus que le système audio ne comporte de haut-parleurs. Optionnellement, les canaux supplémentaires peuvent être générés dynamiquement à partir d'un nombre réduit de canaux originaux par un système de virtualisation.

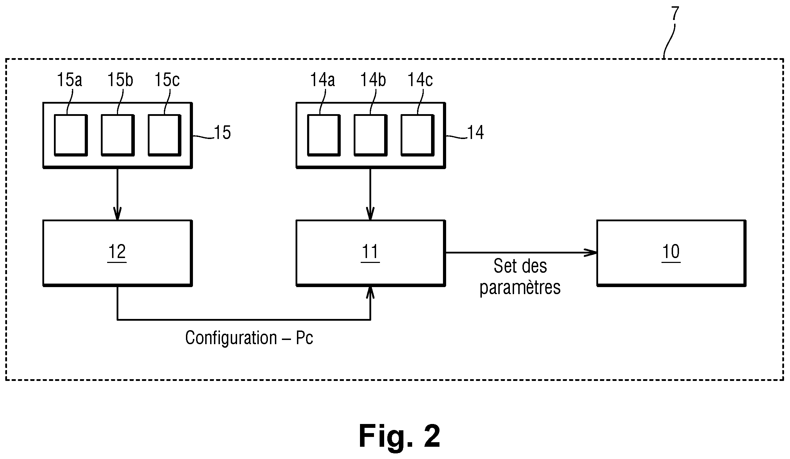

L'unité de traitement 7 met de plus en œuvre un module de configuration 10, un module de paramétrage 11, et un module de contrôle 12. Comme cela est visible sur la figure 2, le module de paramétrage 11 coopère avec un ensemble de sources de données 14, et le module de contrôle 12 coopère avec un ensemble de sources d'informations 15.

Le module de configuration 10 est destiné à configurer le dispositif de restitution audio du boîtier décodeur 1. Le module de configuration 10 effectue des réglages sur les composants audio 5, qui permettent notamment d'adapter le rendu acoustique des haut-parleurs 4. Les paramètres audio concernent notamment les traitements de protection mécanique des haut-parleurs 4 (compresseur audio), la modification du gain sur les fréquences des graves et des aigus, la création de canaux supplémentaires à partir d'autres canaux présents dans les données source (*Up-Mixing*), etc. Le module de configuration 10 peut comprendre un égaliseur configuré pour appliquer des traitements sur les fréquences des signaux audio.

Le module de paramétrage 11 réalise et/ou pilote en temps réel des analyses d'au moins une source de données et, avantageusement, d'au moins deux sources de données distinctes relatives au flux audio-vidéo d'entrée F, de manière à définir un genre du flux audio-vidéo d'entrée F. Le genre appartient à une liste prédéfinie de genres. La liste prédéfinie comprend par exemple les genres « Sport », « Musique » et « Voix ». Chaque genre est associé à des paramètres audio qui forment un profil audio.

Ici, les sources de données sont choisies parmi les sources suivantes : des métadonnées 14a associées au flux audio-vidéo d'entrée F, un signal audio courant 14b issu du signal audio d'entrée A, et au moins une image cible 14c issue du signal vidéo d'entrée V. La au moins une image cible comprend par exemple l'image courante (donc diffusée au moment présent), ainsi qu'éventuellement une ou des images passées.

Le module de paramétrage 11 va donc analyser plusieurs types de données provenant de différentes sources de données relatives au flux, pour reconnaître avec précision le genre du flux audio-vidéo d'entrée F. Les paramètres audio sont définis par le module de paramétrage 11 en fonction du flux, et constituent un profil audio associé au genre. Le module de paramétrage 11 transmet les paramètres audio au module de configuration 10. Alternativement, le module de paramétrage 11 transmet au module de configuration 10 un identifiant du profil audio à prendre en compte.

Le module de configuration 10 adapte alors dynamiquement, en utilisant les paramètres audio définis par le module de paramétrage 11, le réglage du dispositif de restitution audio intégré dans le boîtier décodeur 1, de manière à optimiser le rendu sonore dudit dispositif de restitution audio en fonction du genre du flux audio-vidéo d'entrée F.

Le module de paramétrage 11 réalise donc une analyse « multimodale », en sollicitant un maximum d'informations relatives au flux et disponibles dans le boîtier décodeur 1, ce qui permet d'adapter la configuration de sa sortie audio au contenu diffusé de manière fiable et en un temps minimum (convergence rapide). Cette analyse est multimodale, dans le sens où elle utilise plusieurs sources de donnés distinctes reliées au flux audio-vidéo d'entrée F. La prise en compte de plusieurs sources de données 14 permet d'accélérer la convergence pour déterminer les paramètres de configuration audio. Plus le nombre de sources utilisées est élevé, plus la convergence peut être rapide et plus la configuration de la sortie audio est fiable et précise. Les sources de données utilisées comprennent donc au moins deux sources parmi l'audio joué, du texte (métadonnées du flux, et par exemple le titre de la vidéo, l'artiste, le guide électronique des programmes, etc.) et une ou des images (par exemple une image décodée issue du signal vidéo d'entrée).

Le module de paramétrage 11 peut soit réaliser lui-même des analyses, donc en utilisant les ressources du boîtier décodeur 1, soit piloter des analyses qui sont réalisées dans un équipement externe, par exemple dans un serveur 16 du *cloud* 17.

Le module de contrôle 12, quant à lui, contrôle le module de paramétrage 11 en fonction d'évènements relatifs à la diffusion du flux audio-vidéo d'entrée F, pour faire en sorte que les ressources du module de paramétrage 11 et donc du boîtier décodeur 1 soient plus efficacement utilisées.

Par « ressources », on entend ici des ressources de calculs, effectués par exemple par un processeur de l'unité de traitement 7 dans lequel est mis en œuvre le module de paramétrage 11, et/ou des ressources de mémoire.

L'optimisation de l'utilisation des ressources permet de réduire la consommation électrique du module de paramétrage 11 et donc du boîtier décodeur 1, et de libérer les ressources pour des tâches existantes ou de nouvelles tâches.

Ces événements sont des transitions entre des états actif/en cours d'activation et inactif/en cours de désactivation de la diffusion du flux : lecture, arrêt de la lecture, etc.

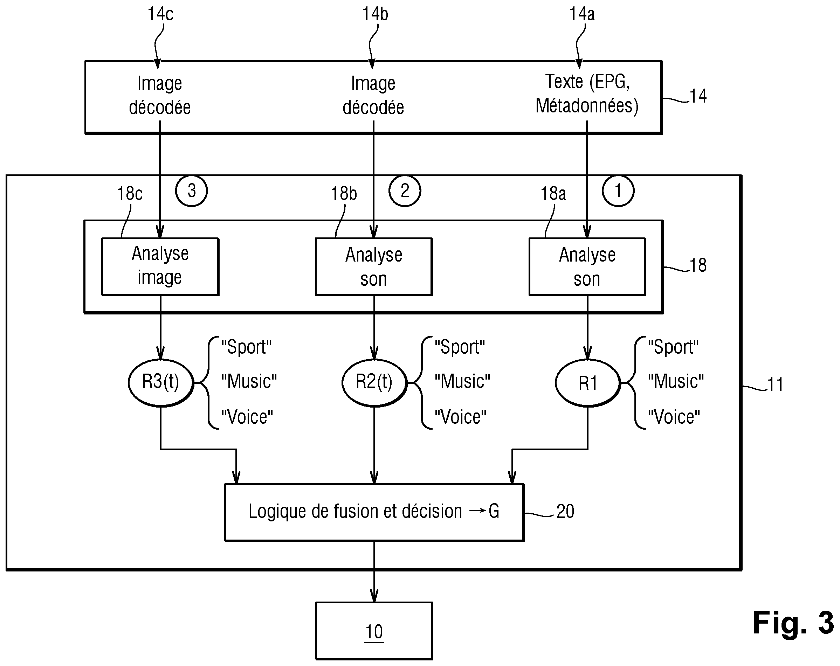

Un exemple de mise en œuvre du module de paramétrage 11 est illustré sur la figure 3. Dans cet exemple, le module de paramétrage 11 est configuré pour obtenir une image décodée 14c, un canal audio décodé 14b et le descriptif du programme TV 14a associé au flux audio-vidéo d'entrée en cours de diffusion. Le module de paramétrage 11 analyse respectivement ces données de manière à fournir pour chaque source un genre déterminé parmi « Sport », « Musique » et « Voix ».

Le module de paramétrage 11 pilote donc ici une première analyse 18a des métadonnées 14a, réalise une deuxième analyse 18b sur un signal audio courant 14b issu du signal audio d'entrée, et réalise une troisième analyse 18c sur au moins une image cible 14c issue du signal vidéo d'entrée.

Chaque analyse 18 a pour résultat une estimation du genre : la première analyse 18a a pour résultat une première estimation R1 du genre du flux audio-vidéo d'entrée, la deuxième analyse 18b a pour résultat une deuxième estimation R2(t) du genre et la troisième analyse 18c a pour résultat une troisième estimation R3(t) du genre. Le module de paramétrage 11 met alors en œuvre un algorithme de décision 20 pour définir le genre G du flux audio-vidéo d'entrée F à partir des estimations du genre.

Comme on l'a vu, trois sources de données sont utilisées ici par le module de paramétrage. Il serait possible de n'utiliser que deux sources de données, ou plus de trois sources de données.

Pour la première analyse 18a, la source d'informations considérée comprend des métadonnées associées au flux audio-vidéo d'entrée. Ces métadonnées proviennent par exemple du guide électronique des programmes (EPG, pour *Electronic Program Guide*).

Dans une diffusion du flux audio-vidéo d'entrée (satellite, Câble, IP, terrestre), l'EPG est normalisé selon le standard DVB EN300468 et propose deux descripteurs contenus dans la table EIT : *Short event descriptor* et *extended event descriptor.* L'ensemble de ces descripteurs peut contenir :

- le nom du programme ;
- l'heure de début et de fin du programme ;
- le type du programme (par exemple journal, sport, film, etc.) ;
- une description courte et une description longue d'un programme ;
- des informations sur le producteur, le nom des acteurs, le genre et d'autres informations textuelles.

Dans le cas d'applications comme *YouTube* et *Spotify* (marques déposées), l'agrégateur média, qui sera décrit plus bas, peut mettre à disposition le titre du flux média, le nom de l'artiste, la durée du flux, un résumé et d'autres métadonnées liées au flux lancé sur le boîtier décodeur 1.

La première analyse 18a est réalisée une seule fois par programme diffusé. Par « programme », on entend par exemple un film, un épisode d'une série télévisée, un évènement sportif particulier (match, course, etc.). La première estimation R1 du genre ne dépend donc pas du temps (même si l'on peut considérer qu'elle est réalisée de manière dynamique puisque répétée à chaque changement de programme diffusé).

Pour la deuxième analyse 18b, la source de données considérée est un signal audio courant issu du signal audio d'entrée. Par « courant », on entend « en cours de diffusion ». Le flux audio-vidéo d'entrée F, provenant d'une source interne ou externe au boîtier décodeur 1, est traité pour extraire les pistes audio du programme courant. Ces pistes audio sont généralement encodées dans un format particulier (par exemple AC3, AAC, etc.). Les pistes audio sont décodées par le boîtier décodeur 1, afin d'obtenir des pistes audio au format PCM *(Pulse-Code Modulation)*. Ces pistes audio forment le signal audio courant, issu du signal audio d'entrée, sur lequel est réalisée la deuxième analyse 18b.

La deuxième analyse 18b est réalisée au moins une fois par programme diffusé, et est ici répétée régulièrement à une fréquence qui, comme on va le voir, peut être adaptée par le module de contrôle 12. La deuxième estimation R2(t) du genre dépend donc du temps.

Pour la troisième analyse 18c, la source de données considérée comprend au moins une image cible du signal vidéo d'entrée.

Le flux audio-vidéo d'entrée F, possiblement reçu par les moyens de communication 6 du boîtier décodeur 1, est traité pour extraire la vidéo du programme courant. Cette vidéo est généralement encodée dans un format particulier (par exemple H265, H264, VP9, MPEG, etc.). Cette dernière est décodée par le boîtier décodeur 1, afin d'obtenir au moins une image, et par exemple une séquence d'images au format brut ARGB, ou YUV, sur laquelle est réalisée la troisième analyse 18c.

La troisième analyse 18c est réalisée au moins une fois par programme diffusé, et est ici répétée régulièrement à une fréquence qui, comme on va le voir, peut être adaptée par le module de contrôle 12. La troisième estimation du genre R3(t) dépend donc du temps.

Selon un mode particulier de réalisation, le module de paramétrage 11 est non seulement configuré pour classifier le flux audio-vidéo d'entrée F selon plusieurs genres (par exemple « Sport », « Musique », « Voix »), mais aussi pour sous-catégoriser chaque genre par sous-genres. Par exemple, pour le genre « Musique », le module de paramétrage 11 est capable d'estimer un sous-genre de musique sélectionné parmi : Rock, Classique, Jazz, Blues, RnB/Pop.

Le module de paramétrage 11 réalise entièrement certaines analyses, et en pilote d'autres (c'est-à-dire qu'il commande l'entité externe en charge de l'analyse (par exemple un serveur 16 du *cloud* 17), qu'il lui transmet les signaux, qu'il acquiert les résultats, etc.). Le module de paramétrage 11 peut aussi réaliser seulement partiellement une analyse, le reste de l'analyse étant réalisé par l'entité externe.

Le module de paramétrage 11 utilise des ressources possiblement importantes du boîtier décodeur 1, ce qui peut impliquer une consommation électrique importante.

Le module de contrôle 12 va contrôler le module de paramétrage 11 de manière à optimiser la consommation électrique du module de paramétrage 11 et donc du boîtier décodeur 1. Pour cela, le module de contrôle 12 définit au moins un paramètre de contrôle Pc (visible sur la figure 2) destiné à contrôler la consommation électrique du module de paramétrage 11, et le module de paramétrage 11 acquiert chaque paramètre de contrôle et adapte la réalisation d'au moins une analyse en fonction dudit paramètre de contrôle Pc.

Pour contrôler la consommation électrique du module de paramétrage 11, le module de contrôle 12 peut par exemple contrôler une fréquence des analyses réalisées par le module de paramétrage 11. Le paramètre de contrôle Pc est alors la valeur de cette fréquence. Comme on va le voir, le module de paramétrage 11 est agencé pour exécuter des inférences de modèles de classification. Dans ce cas, la fréquence des analyses est la fréquence d'exécution desdites inférences.

Pour contrôler la consommation électrique du module de paramétrage 11, le module de contrôle 12 peut aussi contrôler un taux d'utilisation d'un processeur 8 de l'unité de traitement 7, dans lequel est mis en œuvre le module de paramétrage 11. Le paramètre de contrôle est donc le taux d'utilisation du processeur 8. Le module de paramétrage acquiert ce taux, qui est une consigne d'utilisation maximale du processeur, et adapte ses analyses en fonction de ladite consigne.

Le module de contrôle 12 permet donc d'optimiser l'utilisation des ressources matérielles (par exemple processeur(s), mémoire(s)) de l'unité de traitement 7 qui mettent en œuvre le module de paramétrage 11, ce qui permet de réduire la consommation électrique du module de paramétrage 11 et du boîtier décodeur 1, et d'éviter le ralentissement indésirable des autres couches logicielles du boîtier décodeur 1.

Le module de contrôle 12 détecte pour cela la survenue d'au moins un évènement courant parmi un ensemble d'évènements prédéfinis, relatifs à la diffusion du flux audio-vidéo d'entrée F, et contrôle le module de paramétrage 11 en fonction dudit évènement courant de manière à optimiser la consommation électrique du module de paramétrage 11 et donc du boîtier décodeur 1. Le module de contrôle 12 adapte donc le paramètre de contrôle Pc en fonction de l'évènement courant.

Les événements sont donc détectables sur le boîtier décodeur 1 et sont d'origine interne ou externe, c'est-à-dire qu'ils peuvent être soit générés par le boîtier décodeur 1, soit reçus par le boîtier décodeur 1 mais en provenance d'une entité externe au boîtier décodeur 1, comme par exemple des données issues du guide électronique des programmes envoyé par les opérateurs sur des transmissions hertziennes.

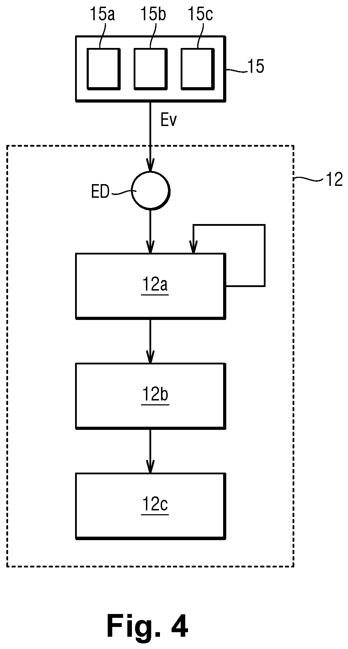

En référence à la figure 4, le module de contrôle 12 comprend trois sous-modules : un sous-module d'écoute 12a, un sous-module d'analyse 12b et un sous-module de configuration 12c.

Lors d'une étape d'initialisation E0, le module de contrôle 12 s'abonne aux sources d'informations 15. De préférence, ces sources 15 sont inscrites dans un fichier de configuration prédéfinie dans le code source du module de contrôle 12.

Le sous-module d'écoute 12a est configuré pour écouter en permanence et détecter les événements en provenance de l'ensemble de sources d'informations 15. Dès qu'un évènement est détecté, le sous-module d'écoute 12a le transmet au sous-module d'analyse 12b et se remet en attente de nouveaux évènements.

Le sous-module d'analyse 12b est configuré pour analyser un ou plusieurs événements préalablement détectés et fournis par le sous-module d'écoute 12a.

Le sous-module de configuration 12c est configuré pour déterminer, en fonction du résultat de l'analyse du sous-module d'analyse 12b, les consignes de configuration à appliquer en entrée du module du paramétrage 11 de manière à le configurer.

Comme déjà mentionné, le module de contrôle 12 écoute en permanence les événements Ev détectés par l'ensemble de sources d'informations 15, au moyen du sous-module d'écoute 12a. Ces événements peuvent provenir de plusieurs sources d'informations distinctes.

Pour obtenir une décision robuste, ces sources doivent être les plus variées possible, en termes d'origine (c'est-à-dire interne ou externe par rapport au boîtier décodeur 1) et en termes de « niveau logiciel » (par exemple niveau système, *driver,* etc..). Ainsi, le sous-module d'écoute 12a est configuré pour écouter un ensemble diversifié d'événements provenant de différentes sources d'informations.

Dans le présent mode de réalisation, on considère trois sources d'informations 15 :

- agrégateur de sessions media 15a du système d'exploitation du boîtier décodeur ;
- guide électronique des programmes 15b ;
- pilote audio et/ou pilote vidéo 15c du boîtier décodeur 1.

L'agrégateur de sessions media 15a est un composant logiciel particulier, qui est présent dans le système d'exploitation du boîtier décodeur 1.

Par exemple, ce composant logiciel est le service *MediaSessionService* disponible dans le système d'exploitation *Android TV* (marque déposée).

Ce composant logiciel est particulièrement avantageux pour jouer le rôle d'agrégateur d'informations pour l'obtention d'informations liées au flux audio-vidéo d'entrée F, dans la mesure où il est capable de fournir des informations sur l'état de lecture des flux (par exemple états « Pause », « Lecture ») ainsi que des métadonnées relatives au contenu du flux audio-vidéo d'entrée (par exemple le titre du contenu, le nom de l'artiste, etc.).

L'EPG 15b est une source d'informations externe au boîtier décodeur 1. Il est fourni par un opérateur et comporte des informations textuelles relatives au programme TV en cours de lecture issu de la source de diffusion (par exemple satellite, câble ou TNT). Par exemple, ces informations comprennent le nom du programme en cours de visionnage.

De manière connue, l'EPG traite des informations issues :

- des tables DVB EIT (*Digital Video Broadcasting-Event Information Table*), si l'EPG est diffusé au moyen d'un signal de diffusion sur des mediums tels que le satellite, le câble ou le réseau hertzien, et/ou
- d'un serveur sur un réseau IP (*Internet Protocol*).

Ces informations sont relatives à un programme de télévision numérique. Elles indiquent par exemple, le début et la fin du programme.

Dans le cadre du présent mode de réalisation, une base de données locale des programmes TV est mise en œuvre dans le boîtier décodeur 1 et est alimentée par l'EPG qui la met à jour en continu. De manière avantageuse, cette base de données comprend notamment des informations sur l'événement actuel (c'est-à-dire *EIT Present*) et sur l'événement suivant (c'est-à-dire *EIT Following*) d'une chaîne de télévision. De préférence, cette base de données est interrogeable pour récupérer des informations liées à des programmes. Des entités logicielles externes à cette base de données (par exemple processus ou processus légers (*thread*)) peuvent s'abonner à des événements, tels que la transition d'un événement courant vers l'événement suivant pour une chaîne donnée.

Les informations de début et fin de programme peuvent être utilisées pour appliquer instantanément une configuration de contrôle du module de paramétrage 11, correspondant à un début et une fin d'un flux audio.

En ce qui concerne les informations de pilotes audio/vidéo 15c (*driver*), on sait que, pour pouvoir démarrer un contenu audio ou vidéo sur le boîtier décodeur 1, l'application en charge de ce démarrage communique directement ou indirectement (via le système d'exploitation du boîtier décodeur 1) avec la « couche pilote » (driver) pour allouer des ressources et lancer le décodage et l'affichage.

En interrogeant ou en surveillant le pilote audio et/ou le pilote vidéo du boîtier décodeur 1, il est possible de détecter le lancement d'un contenu sur le boîtier décodeur 1.

Par exemple, une notification du pilote audio constitue une information indicative du lancement d'un programme uniquement audio. Cette notification peut être associée à une notification de pilote liée au boîtier décodeur 1.

Dans tous les cas, il est possible de détecter le démarrage d'un programme audio ou vidéo (incluant une composante sonore) sur la base des notifications de pilote.

Afin de réaliser la lecture du flux audio-vidéo d'entrée F, une application maître est nécessaire pour piloter l'ensemble des acteurs logiciels (par exemple la partie graphique, le décodage audio et le décodage vidéo).

Il est possible de différencier une application dite *Broadcast,* c'est-à-dire alimentée par une source de diffusion véhiculant des media basés sur des normes telles que DVB EN 300 468 et ISO/IEC 13818, d'une application dite OTT (*Over The Top*) basée sur des technologies de *streaming* - que l'on peut traduire par « lecture en continu » (par exemple HTTP, MPEG DASH, *Microsoft Smooth Streaming*).

La distinction d'une application *Broadcast* d'une application OTT peut être utilisée pour définir les sources d'informations prises en compte.

Ainsi, le module de contrôle 12 sélectionne au moins une source d'informations 15, pour détecter la survenue de l'évènement courant, en fonction d'une source du flux audio-vidéo d'entrée F.

Par exemple, pour une application *Broadcast,* l'EPG 15b est plus susceptible d'être disponible et d'être utilisé, tandis que pour une application OTT, telle que Netflix, les informations en provenance de l'agrégateur média 15a du système seront privilégiées.

Le module de contrôle 12 détecte donc la survenue d'un évènement courant Ev parmi un ensemble d'évènements prédéfinis, relatifs à la diffusion du flux audio-vidéo d'entrée F.

L'ensemble d'évènements prédéfinis comprend des transitions entre des états relatifs à la lecture du flux audio-vidéo d'entrée F.

L'ensemble d'évènements prédéfinis comprend au moins :

- une première transition, d'un état actif ou d'activation du flux audio-vidéo d'entrée, vers un état inactif ou de désactivation, et/ou
- une deuxième transition, d'un état inactif ou de désactivation du flux audio-vidéo d'entrée, vers un état actif ou d'activation, et/ou
- une troisième transition entre un premier état actif, dans lequel le flux d'entrée contient un premier programme diffusé, à un deuxième état actif, dans lequel le flux d'entrée contient un deuxième programme diffusé.

Ici, les états relatifs à la lecture du flux audio-vidéo d'entrée sont les suivants :

- état « arrêt de la lecture » (état inactif) : la lecture du flux est arrêtée, aucune ressource matérielle n'est utilisée ;
- état « en cours d'arrêt » (état de désactivation) : le flux est en train d'être arrêté ;
- état « démarrage » (état d'activation) : la lecture du flux est en cours de démarrage et les allocations aux ressource matérielles sont en cours d'engagement ;
- état « lecture » (état actif) : le flux est en cours de lecture, toutes les ressources matérielles sont correctement allouées et utilisées ;
- état « pause » (état actif sans inférence) : la lecture du flux est momentanément arrêtée, toutes les ressources matérielles restent actives et allouées.

Chaque transition entre ces états peut être un évènement qui conduit le module de contrôle 12 à émettre une commande en direction du module de paramétrage 11, et donc à modifier le paramètre de contrôle Pc.

Si le paramètre de contrôle Pc utilisé est la fréquence des analyses, le module de contrôle 12 réduit la fréquence des analyses réalisées par le module de paramétrage 11 lorsque survient la première transition, et augmente ladite fréquence lorsque survient la deuxième transition ou la troisième transition.

Le module de contrôle 12 stoppe les analyses 18 lorsque le flux d'entrée passe dans l'état inactif.

Si le paramètre de contrôle Pc utilisé est le taux d'utilisation du processeur, le module de contrôle 12 réduit la consigne du taux d'utilisation du processeur lorsque survient la première transition, et augmente ladite consigne lorsque survient la deuxième transition ou la troisième transition.

Le module de contrôle 12 confère une valeur nulle à ladite consigne lorsque le flux d'entrée passe dans l'état inactif.

On note qu'ici, le module de contrôle 12 est aussi agencé pour contrôler le module de paramétrage 11, de manière à optimiser une utilisation des ressources du module de paramétrage 11 et donc du boîtier décodeur 1, en fonction d'une convergence ou d'une divergence des analyses réalisées par le module de paramétrage 11.

Si l'analyse des différentes sources de données 14 converge vers une même estimation du genre, le module de contrôle 12 diminue le paramètre de contrôle. Par contre, si l'analyse diverge, parce que les sources de données 14 fournissent des estimations du genre qui varient dans le temps, le module de contrôle 12 augmente le paramètre de contrôle.

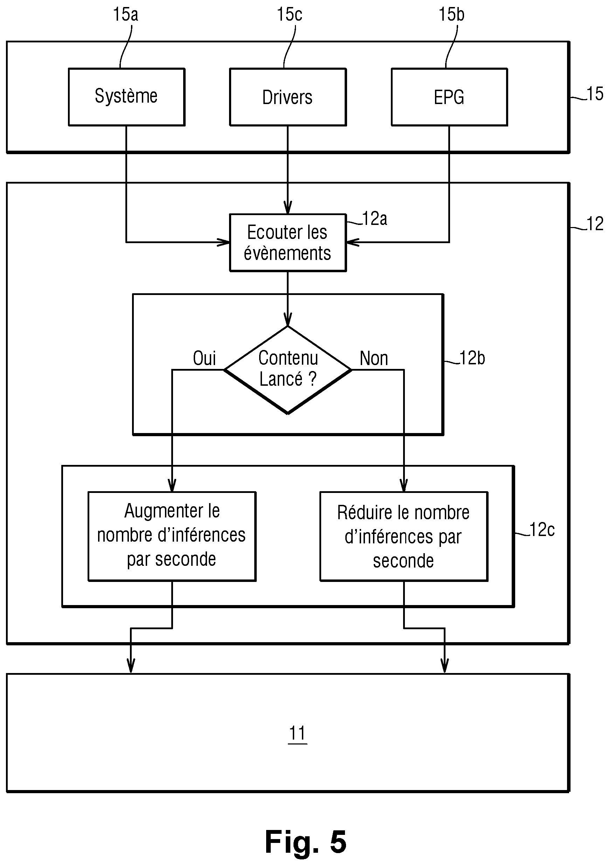

En référence à la figure 5, on s'intéresse maintenant à un mode de réalisation particulier du boîtier décodeur 1. Dans ce mode de réalisation, le système d'exploitation du boîtier décodeur 1 est *Android TV.*

Au moment du démarrage du boîtier décodeur 1, le module de contrôle 12 est démarré et commence premièrement à s'abonner aux services disponibles des sources d'informations 15 fournissant les informations nécessaires pour la détection du démarrage ou de l'arrêt du flux audio-vidéo d'entrée. De préférence, le sous-module d'écoute 12a du module de contrôle 12 écoute des événements provenant des trois sources décrites précédemment : agrégateur de sessions média, guide électronique des programmes, pilotes audio et/ou vidéo du boîtier décodeur.

Concernant l'agrégateur de sessions media, *MediaSessionService* met à disposition une « fonction de retour asynchrone » qui se déclenche quand une application démarre un flux audio-vidéo d'entrée.

Cette fonction de retour asynchrone retourne une liste d'objets *MediaController.* Chaque *MediaController* représente un des flux audio-vidéo actuellement actifs. Chaque flux audio-vidéo démarré sur *Android TV* possède alors son propre *MediaController.*

Ce *MediaController* met aussi à disposition des événements sur le flux en cours, comme le changement de l'état de lecture (par exemple état Lecture vers état Pause).

En ce qui concerne les informations de pilote (*driver*), lors d'un démarrage de contenu, la couche pilote du boîtier décodeur 1 réserve des accès au matériel pour réaliser des décodages audio-vidéo. Ces accès sont mémorisés à travers une référence mémoire pour chaque ressource utilisée. Il est possible d'interroger cette référence ou de s'y abonner pour obtenir des informations sur le flux en cours de décodage. Par exemple, il est possible d'interroger le pilote vidéo du boîtier décodeur 1 via sa référence pour obtenir des informations sur le codec en cours de décodage.

Comme décrit précédemment, la base de données des programmes TV peut notifier une transition entre l'événement « courant » et l'événement « suivant » d'un programme TV en cours. Elle peut également, si cela est demandé, notifier ces transitions sur un sous-ensemble prédéfini de chaînes appartenant au plan de services TV du boîtier décodeur 1, auquel l'utilisateur est abonné.

Les événements Ev détectés par le sous-module d'écoute 12a sont envoyés au sous-module d'analyse 12b pour les analyser et décider s'il s'agit d'un lancement ou d'un arrêt d'un flux audio-vidéo sur le boîtier décodeur 1.

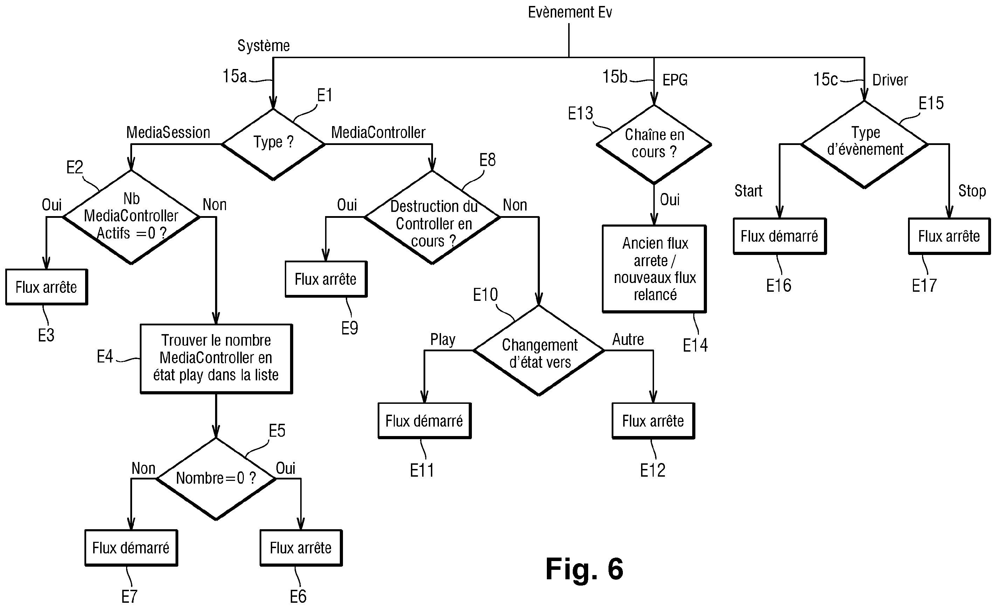

En référence à la figure 6, dans le cas d'un événement système, le sous-module d'analyse 12b détermine le type de l'évènement (étape E1). Si l'évènement est en provenance du service *MediaSession* du système d'exploitation *Android TV,* le sous-module 12b vérifie premièrement la taille de la liste de *MediaController* obtenue. Si elle est vide, le sous-module 12b considère qu'il n'y a plus de flux actif sur le boîtier décodeur 1 (étape E3). Sinon, le sous-module 12b parcourt la liste et compte le nombre d'objets actifs dans la liste, c'est-à-dire le nombre de *MediaController* dont l'état est lecture (étape E4). Le sous-module d'analyse 12b compare ce nombre avec 0 (étape E5). Si ce nombre est égal à 0, il considère qu'il n'y a pas de flux audio/vidéo dans l'état lecture sur le boîtier décodeur 1 (étape E6). Sinon, il considère qu'un flux a démarré (étape E7).

A l'étape E1, si l'événement reçu est en provenance d'un *MediaController,* le sous-module d'analyse 12b vérifie la nature de l'appel asynchrone.

Le sous-module d'analyse 12b vérifie si une destruction du *MediaController* actif est en cours (étape E8). Si c'est le cas, cela signifie que le flux rattaché à ce contrôleur s'est arrêté (étape E9). Sinon, le sous-module d'analyse 12b vérifie si un changement d'état s'est produit (étape E10). Un changement d'état vers l'état « lecture », signifie que le flux est en cours de lecture (étape E11). Un changement d'état différent signifie que le flux est arrêté (étape E12).

Dans les deux cas, le sous-module d'analyse 12b vérifie si un « minimum » de métadonnées est disponible, sinon, l'événement sera ignoré. Par « minimum » il faut comprendre au moins le titre et la durée du contenu en cours de diffusion du flux audio-vidéo d'entrée.

Pour les événements en provenance de la base de données de l'EPG 15b, l'EPG met à disposition des événements de transition d'un programme courant vers le suivant pour toutes les chaînes de l'EPG.

Ainsi, après réception d'un événement EPG, le sous-module d'analyse 12b vérifie si l'utilisateur regarde actuellement la chaîne concernée par cet événement en interrogeant le système d'exploitation du boîtier décodeur 1 (ici *Android TV*) : étape E13. Si ce n'est pas le cas, l'événement est ignoré. Sinon, le sous-module 12b considère qu'un programme, donc un flux audio-vidéo, s'est terminé et qu'un nouveau est démarré (étape E14).

Concernant les événements « pilote » 15c, la référence mémoire du boîtier décodeur 1 possède les informations sur l'utilisation du boîtier décodeur 1. Le sous-module 12b vérifie le type d'évènement (étape E15). Si l'événement reçu depuis cette référence est un démarrage du bloc matériel décodeur audio-vidéo du boîtier décodeur 1, ceci signifie qu'un flux est en cours de lecture (étape E16) ; une libération du décodeur audio-vidéo dit « Stop » signifie que le flux est arrêté (étape E17).

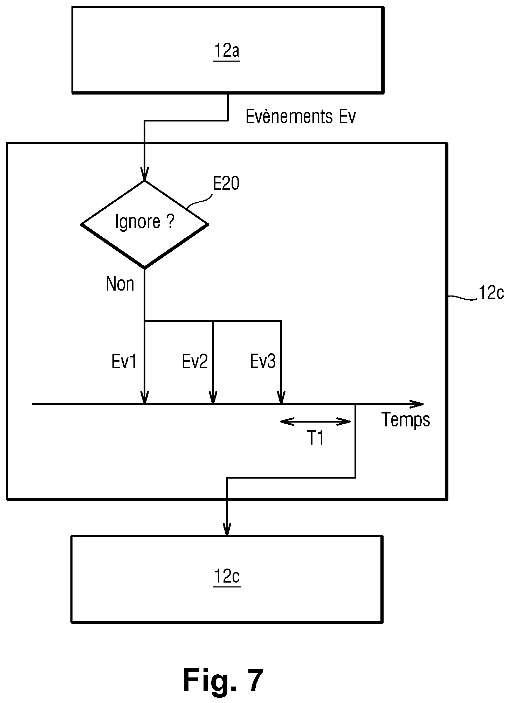

On s'intéresse maintenant, en référence à la figure 7, à la prise de décision mise en œuvre dans le module de contrôle 12.

Le sous-module d'écoute 12a détecte les évènements Ev.

Le sous-module d'analyse 12b vérifie pour chaque évènement, si celui-ci doit être ignoré ou non (étape E20).

Le sous-module d'analyse 12b du module de contrôle 12 commence par accumuler un ensemble d'événements non ignorés (par exemple Ev1, Ev2 et Ev3). Si, après un temps prédéfini T1 (par exemple T1 = 500 ms), plus aucun événement n'est reçu, le sous-module d'analyse 12b vérifie les événements accumulés pour prendre une décision.

Plusieurs modes de prise de décision sont envisageables, qui sont par exemple basés sur l'information du dernier événement reçu.

Comme on l'a vu, selon le contexte du système (par exemple en mode « Applicatif » avec une application dédiée pour la lecture d'un contenu audio-vidéo, ou en mode « Direct » dans le contexte d'une source audio-vidéo de type DVB), il peut être privilégié une source d'informations par rapport à une autre. Ce choix se justifie par le fait que certaines informations sont plus fréquemment disponibles dans un contexte que dans un autre. Par exemple, dans le cas d'une utilisation d'une application de *streaming,* les événements provenant de *MediaSession* peuvent être privilégiés, car ils sont plus fréquemment disponibles que d'autres informations comme l'EPG. Dans le cas du mode « Programme en direct », le système peut utiliser les informations de l'EPG. Cette configuration selon le contexte du système peut être prédéfinie ou bien précisée par l'utilisateur selon un menu dans une interface graphique.

Optionnellement, le temps prédéfini T1 est tel que T1 = 0. Cela signifie que le sous-module d'analyse 12b prend une décision pour chaque événement reçu (c'est-à-dire sans attendre d'avoir accumulé plusieurs événements).

Optionnellement, et dans le cas d'un événement *MediaSession/MediaController,* le sous-module d'analyse 12b peut procéder à des vérifications supplémentaires des métadonnées présentes dans ces événements pour détecter s'il s'agit d'une publicité ou non. La distinction d'un programme dit « intéressant » pour le téléspectateur, d'un programme dit « publicitaire » à caractère moins important, peut être effectuée pour appliquer une configuration différente selon le type de programme publicitaire ou non. Dans le cas d'une publicité, le sous-module d'analyse 12b peut par exemple considérer qu'il n'y a pas de flux en cours de lecture. Ces vérifications dépendent également du contexte du système en cours d'utilisation. Par exemple, dans un mode « applicatif » avec l'application *Spotify* (marque déposée), un « drapeau » (ou balise) nommé « *ADVERTISEMENT* » est présent dans les métadonnées pour indiquer que c'est une publicité. Dans ce cas, s'il s'agit du dernier événement *MediaSession* de l'historique, le système ignore les autres événements.

Le module de contrôle 12 configure alors le module de paramétrage 11, en utilisant les paramètres de consommation précédemment évoqués, qui sont déduits des résultats d'analyses réalisées par le sous-module d'analyse 12b décrit précédemment.

Si le sous-module d'analyse 12b du module de contrôle 12 détermine qu'un flux est actif, le sous-module de configuration 12c augmente le nombre d'analyses par seconde effectuées par le module de paramétrage 11, en le passant à 2 par exemple. Sinon, le sous-module de configuration 12c configure le module de paramétrage 11 à 0,1 analyses par seconde (c'est-à-dire une analyse chaque dix secondes).

Le module de contrôle 12 peut aussi définir une consigne d'utilisation du processeur (CPU, pour *Central Processing Unit*) maximale. Par exemple, cette consigne est prédéterminée dans le sous-module 12c comme étant égale à 5% dans le cas d'un flux en cours, et 1% sinon.

On s'intéresse maintenant plus particulièrement aux analyses réalisées et pilotées par le module de paramétrage 11.

Ici, le module de paramétrage 11 classifie chaque flux audio-vidéo d'entrée F selon un genre parmi plusieurs genres prédéfinis, en l'occurrence « Sport », « Voix » et « Musique ». Le module de paramétrage 11 peut aussi sous-catégoriser chaque genre par sous-genres. Par exemple, pour le genre « Musique », le module de paramétrage détermine un sous-genre de musique parmi : Rock, Classic, Jazz, Blues, RnB/Pop.

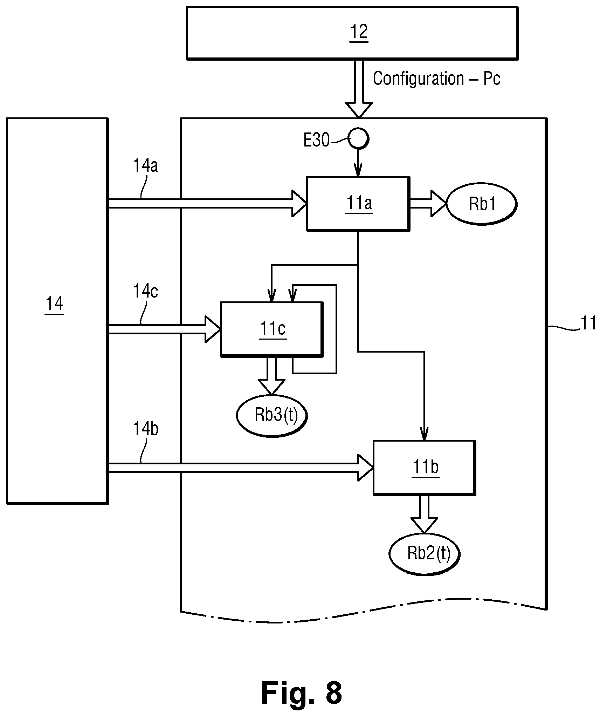

En référence à la figure 8, l'analyse débute par une étape d'initialisation E30 qui comprend :

- la récupération du ou des paramètres de contrôle Pc en provenance du module de contrôle 12 (ici le nombre d'inférences par seconde et/ou le taux d'utilisation du processeur) ;
- le chargement des valeurs de référence en mémoire volatile pour les étapes à suivre (voir les sous-modules 11a, 11b, 11c décrits ci-après), depuis une mémoire non-volatile ;
- l'initialisation des algorithmes des différents sous-modules du module 11 ;
- optionnellement, une initialisation du processus pour limiter la consommation CPU par des moyens disponibles, par exemple par le système d'exploitation (par exemple l'application *cpulimit*).

Afin d'avoir une estimation préliminaire du genre du flux audio-vidéo d'entrée en cours de lecture, le sous-module 11a commence par analyser le texte des métadonnées 14a de ce flux. Le sous-module 11a produit une première estimation préliminaire Rb1 du genre du flux audio-vidéo d'entrée F. La première estimation préliminaire Rb1 comprend des probabilités d'appartenance aux différentes classes (c'est-à-dire aux différents genres).

Puis, les analyses des sources « audio » 14b et « image » 14c sont effectuées en parallèle par respectivement les sous-modules 11b et 11c. En sortie de ces analyses, deux nouvelles estimations préliminaires Rb2(t) et Rb3(t) du genre du flux sont obtenues et sont détaillées ci-après. Ces estimations préliminaires sont à nouveau des probabilités d'appartenance aux différentes classes.

Pour l'obtention des estimations préliminaires Rb2(t) et Rb3(t), l'analyse est faite en continu, tant que le flux est en cours de lecture, contrairement à l'estimation Rb1, qui est obtenue par une analyse réalisée une seule fois par programme en cours de lecture.

Comme on va le voir, la première analyse 18a, la deuxième analyse 18b et la troisième analyse 18c utilisent des modèles d'apprentissage automatique, qui sont ici des modèles de classification.

Les classifications de la première analyse 18a et de la troisième analyse 18c sont possiblement des classifications dites *Zero-Shot.* Le problème de classification est l'un des classiques de l'apprentissage automatique. La classification consiste à entraîner un réseau de neurones pour prédire le type d'une nouvelle instance. Le type prédit par le réseau est une classe parmi un ensemble fixe de classes propre au réseau. Ainsi, un réseau entraîné à reconnaitre des chats et des chiens à partir d'une image fournie en entrée, n'est pas capable de reconnaître une tortue (comportement imprédictible).

Dans le cas des classifications *Zero-Shot,* on applique en entrée du réseau les classes ainsi que l'instance à classifier. Le réseau est donc capable de prédire la distribution de probabilité de l'appartenance de cette instance à ces classes. Le réseau ici n'est pas « théoriquement » limité à un ensemble fixe de classes. Le modèle peut réaliser la classification avec des instances ou des classes non rencontrées pendant l'entraînement.

Dans cette implémentation, une instance représente un texte dans le cas d'analyse des métadonnées, et une image pour la partie analyse d'image.

On s'intéresse maintenant à la première analyse 18a.

Après le lancement d'un flux audio-vidéo d'entrée F sur le boîtier décodeur 1, le sous-module 11a vérifie la présence de métadonnées (source 14a) associées à ce flux. Dans le cas où ces métadonnées données sont présentes, le module de paramétrage 11 pilote une première analyse 18a sur ces métadonnées pour obtenir une première évaluation du genre du flux audio-vidéo d'entrée F.

La première analyse 18a est une analyse de texte qui est appliquée sur ces données pour en déduire la première estimation préliminaire Rb1. L'analyse de texte peut être réalisée dans une instance *cloud* ou dans le boîtier décodeur 1. Selon un mode de réalisation basé sur une instance *cloud,* le sous-module 11a utilise des réseaux de neurones à base de transformeurs comme BART ou Gemma.

Ainsi, dans un mode de réalisation, une grande partie de cette première analyse 18a, et notamment l'inférence du réseau de neurones, est réalisée non pas dans l'unité de traitement 7 du boîtier décodeur 1 mais dans un serveur 16 du *cloud* 17.

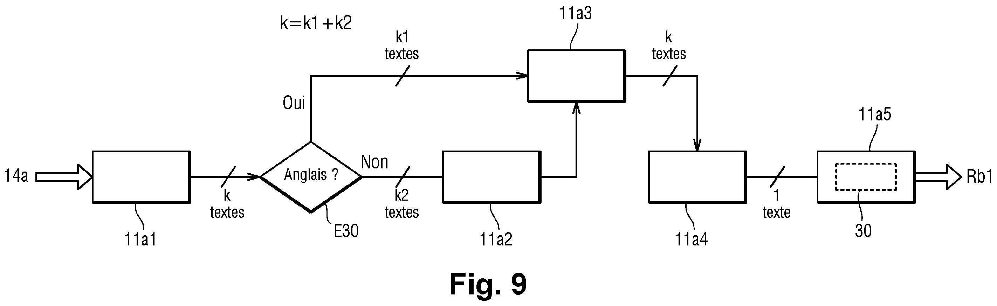

La figure 9 illustre un exemple de mise en œuvre pour analyser les textes des métadonnées 14a et prendre une décision sur le genre du flux dans le cadre du présent mode de réalisation.

Cette implémentation est basée sur des modèles de type BART, qui est un transformateur lancé par *Meta* en 2019. Ce transformateur peut être entraîné sur plusieurs tâches *Sequence to Sequence* (par exemple traduction, résumé de texte, etc.).

Le sous-module 11a1, optionnel, permet de détecter la langue du texte. Les langues utilisées dans les champs de métadonnées sont détectées, par exemple au moyen d'un modèle de *Mediapipe* (*Google*)*.* En sortie du bloc 11a1, il y a k textes détectés selon k champs de données véhiculés dans la source 14a. Le sous-module 11a1 détecte la langue de chaque texte inclus dans les métadonnées et vérifie si cette langue est l'anglais (étape E30).

Parmi ces k textes se trouvent k1 textes en anglais et k2 textes non-anglais, de sorte que k = k1 + k2.

Si la langue détectée lors de la première étape n'est pas l'anglais, le texte correspondant est traduit en anglais dans le sous-module 11a2, par exemple au moyen d'un réseau BART capable de faire la traduction entre 50 différentes langues.

Optionnellement, le sous-module 11a3 est configuré pour réduire la taille du texte, par exemple au moyen d'un autre réseau BART adapté à résumer un texte.

Le sous-module 11a4 est configuré pour grouper les textes des différents champs de métadonnées en un seul grand texte agrégé, en anglais, par exemple en utilisant un patron (*template*) prédéfini.

Le sous-module 11a5 est configuré pour classifier le texte construit par le sous-module 11a4 et reconnaitre si les métadonnées correspondent à un contenu de genre « Sport », « Musique », etc.

La première analyse 18a sur les métadonnées 14a comprend donc l'étape d'exécuter une unique inférence, pour chaque programme diffusé, d'un premier modèle de classification 30 préalablement entraîné, en appliquant le texte agrégé en entrée dudit premier modèle de classification, pour produire une première estimation préliminaire du genre Rb1.

La contraction du texte par résumé, réalisée par le sous-module 11a3, permet d'améliorer les résultats de l'étape de classification par le module 11a5.

Le premier modèle de classification 30 utilise un transformateur. Cette classification peut être effectuée par un réseau BART de *Zero-Shot* classification. Selon d'autres modes de réalisation, il est possible aussi d'utiliser un LLM (*Large Language Model*) *OpenSource* comme Gemma, ou un service payant comme *Gemini Pro* (d'où l'intérêt supplémentaire du sous-module 11a3 « résumé de texte », car la facturation est faite suivant la taille du texte traité) pour prédire le genre du flux correspondant aux métadonnées analysées.

Selon le présent mode de réalisation sous *Android TV,* dans le cas d'un flux Broadcast, les métadonnées 14a sont obtenues par concaténation du titre du programme TV et *l'extended descriptor* présent dans la table EIT.

Optionnellement, une autre analyse de texte peut être réalisée en utilisant le *Short descriptor à* la place de *l'extended descriptor.*

Optionnellement, les deux analyses peuvent être effectuées pour obtenir deux estimations préliminaires distinctes Rb1.

Dans le cas d'un flux OTT d'origine applicatif (par exemple *YouTube, Spotify*)*,* les métadonnées sont obtenues par concaténation de toutes les informations disponibles dans *Android MediaController Metadata,* de préférence sous la forme d'un patron (*template*) prédéfini. Par exemple, dans le cas d'un flux *YouTube* où les informations sont le titre et le nom de la chaîne, le texte à analyser est créé en utilisant le template suivant :

« title : <titre extrait>, channel : <chaîne extraite> ».

Selon le présent mode de réalisation, la détection de la langue, la traduction ainsi que le résumé sont appliqués sur chaque champ de métadonnées indépendamment des autres et avant la concaténation dans le patron.

Selon le présent mode de réalisation, en utilisant un réseau BART, un ensemble de textes (classes) prédéfinis est utilisé pour mesurer leur similarité avec les métadonnées. Par exemple, après la construction du texte à analyser par le module 11a4, ce dernier est passé au réseau de classification *Zero-Shot* du module 11a5 ainsi que les expressions suivantes : « A Sports Event », « A sports match », « A News Show », « A Talkshow », « A music event », « A music video ».

Selon cet exemple, il en résulte deux expressions par classe audio.

Optionnellement, et selon ce mode de réalisation, des expressions relatives au sous-genre peuvent aussi être transmises dans un second temps au module 11a5 pour mesurer la similarité, comme « Rock Music », « Blues Music », etc.

Selon cet exemple, il en résulte une expression par sous-catégorie.

Il faut noter que le nombre d'expressions par classe n'est pas limitatif et qu'il est possible d'utiliser un nombre différent pour chaque catégorie/sous-catégorie.

La sortie Rb1 comporte les valeurs de similarité entre le texte de métadonnées et ces expressions.

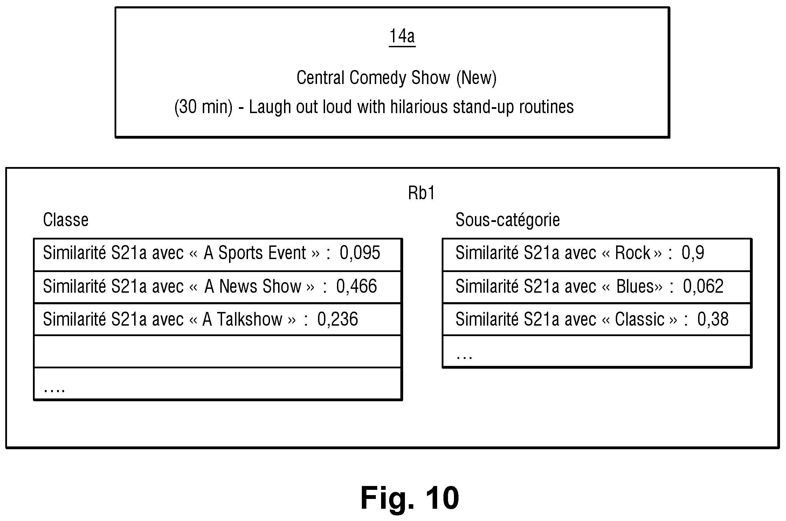

On voit sur la figure 10 un tableau représentant la sortie Rb1 de la première analyse. Les sous-catégories (sous-genres) sont classifiées indépendamment de la classification des genres.

La deuxième analyse 18b comprend une exécution d'inférences d'un deuxième modèle de classification préalablement entraîné, en appliquant le signal audio courant en entrée dudit deuxième modèle de classification.

Le module de paramétrage 11 analyse le signal audio courant « n » fois par seconde, « n » étant défini par le module de contrôle 12.

Le deuxième modèle de classification est configuré et entraîné pour estimer le genre et/ou le sous-genre du flux du signal audio courant A et donc du flux audio-vidéo d'entrée F.

Le deuxième modèle de classification est ici par exemple un réseau neuronal convolutif de type YAMNet, ou bien de type VGGish.

Le signal audio traité, décodé par le boîtier décodeur 1, est appliqué en entrée du deuxième modèle de classification.

Le modèle YAMNet est un réseau de neurones introduit et entrainé par des chercheurs chez *Google*. Par exemple, ce réseau est configuré pour prendre en entrée un signal audio monocanal PCM en 32-bit flottant, échantillonné à 16 kHz et d'une taille égale à 15600 échantillons (ce qui est équivalent à une durée de 0,975 seconde).

Le réseau neuronal est ici configuré pour classifier le genre du contenu audio parmi un ensemble de 521 classes.

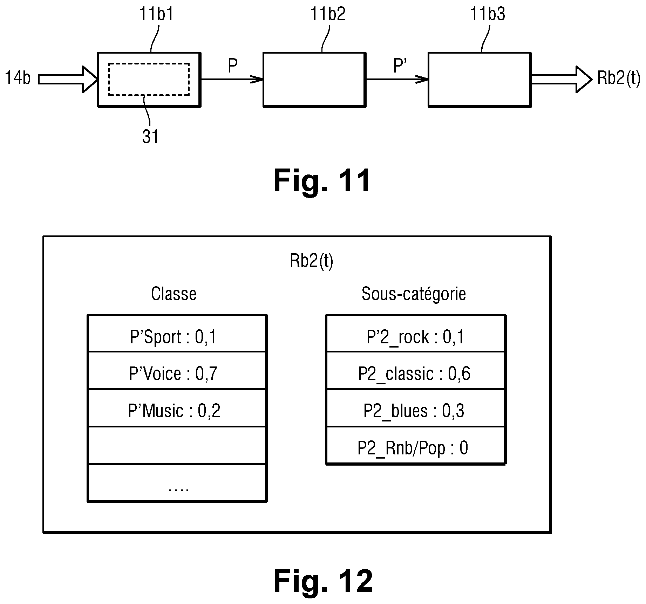

En référence à la figure 11, le sous-module 11b1 acquiert le signal audio traité 14b qui est appliqué en entrée du deuxième modèle de classification 31, ici par exemple le réseau YAMNet. Cette analyse fournit une distribution de probabilités P sur les 521 classes. Dans le sous-module 11b2, une autre liste de valeurs de probabilités finales P' est calculée en fonction de P.

Par exemple, les probabilités P' finales des genres Sport, Musique et Voix sont calculées comme suit :

$$P'_{Sport} = (P_{Cheering} + P_{Ball\ Sound} + P_{Scream} + ...) \times K1 \quad (e.g.\ K1 = 100)$$

$$P'_{Voice} = P_{Voice} / P_{Total}$$

$$P'_{Silence} = P_{Silence} / P_{Total}$$

$$P'_{Music} = P_{Music} / P_{Total}$$

$$P_{Total} = P_{Voice} + P_{Silence} + P_{Music}$$

Optionnellement, un lissage sur les valeurs P' peut être effectué pour éviter les dérives.

Optionnellement, le sous-module 11b2 estime aussi les probabilités des sous-genres (par exemple Rock, Blues, Jazz, etc). Pour trouver ces probabilités, une cartographie spécifique pour chaque genre est appliquée à la sortie du réseau de neurones 31.

Le sous-module 11b2 calcule premièrement une valeur P'1_<genre> pour chaque genre.

Pour le sous-genre Rock par exemple, P'1_rock(t) est la somme de toutes les sorties du réseau dont le sous-genre est Rock comme le Metal, RockNRoll, etc.

Une valeur similaire est calculée ensuite pour les genres Classic, Blues, RnB/Pop, Disco et Vocal.

Ces valeurs sont ensuite normalisées sur la somme des P'1_<genre> pour avoir une distribution de probabilités. Par exemple, pour un genre « i » donné :

$$P'1\_rock\_norme(t) = P'1\_rock(t) / Somme(P'1\_i(t))$$

Après normalisation, une probabilité P'2_<genre> est calculée en utilisant la formule suivante :

P'2_<genre>(t) = (P'2_<genre> (t-1) + PMusic (t) * P'1_<genre>_norme(t)) / (1 + PMusic(t))

Cette formule signifie que la valeur de P'1_<genre>_norme est fiable uniquement quand PMusic est élevée, donc lorsqu'il est très probable qu'il s'agisse vraiment de musique.

Après avoir trouvé les valeurs P' et P'2_<genre>, le sous-module 11b3 commence à construire la réponse Rb2(t) comme illustré dans le tableau de la figure 12.

A nouveau, les sous-catégories (sous-genres) sont classifiées indépendamment de la classification des genres.

On s'intéresse maintenant à la troisième analyse 18c.

Le module de paramétrage 11 réalise une troisième analyse 18c sur au moins une image cible 14c issue du signal vidéo d'entrée V, ladite troisième analyse comprenant une exécution d'inférences d'un troisième modèle de classification préalablement entraîné, en appliquant les images en entrée dudit troisième modèle de classification.

Le module de paramétrage 11 réalise « n » analyses par secondes sur la au moins une image cible, « n » étant défini par le module de contrôle 12. Pour chaque analyse, le module de paramétrage 11 analyse l'image courante correspondant au temps présent et éventuellement une ou des images passées.

Le troisième modèle de classification est par exemple un réseau neuronal convolutif du type *MobileNet* ou CLIP (pour *Contrastive Language-Image Pretrained*).

Le réseau *MobileNet* réalise des comparaisons Image/Image. *MobileNet* est une architecture de réseau neuronal convolutif, optimisée pour être exécutée sur des dispositifs périphériques (*edge devices*). Cette architecture peut être entraînée sur plusieurs tâches dont la vectorisation d'une image. Cette tâche consiste à transformer deux images similaires en deux vecteurs proches (par exemple selon la distance cosinus).

Le réseau CLIP est un réseau de neurones entraîné sur des paires Image/Texte. Ce réseau est capable de mesurer une similarité entre un texte et une image. Ce réseau peut être utilisé pour faire de la classification en *Zero-Shot.*

Selon un mode de réalisation, une base de données comprenant plusieurs vecteurs d'images par genre (ou classe) est embarquée dans l'une des mémoires 9 de l'unité de traitement 7 du boîtier décodeur 1. Il s'agit par exemple de vecteurs liés à des images de stades, piscine, Formule 1, etc. pour le genre « Sport », ainsi que des images de concerts pour le genre « Musique » et des images d'émissions de télévision comme *talkshows,* journal télévisé, pour le genre « Voix ».

Les images utilisées pour cette troisième analyse sont des captures d'écran du contenu que l'utilisateur est en train de regarder.

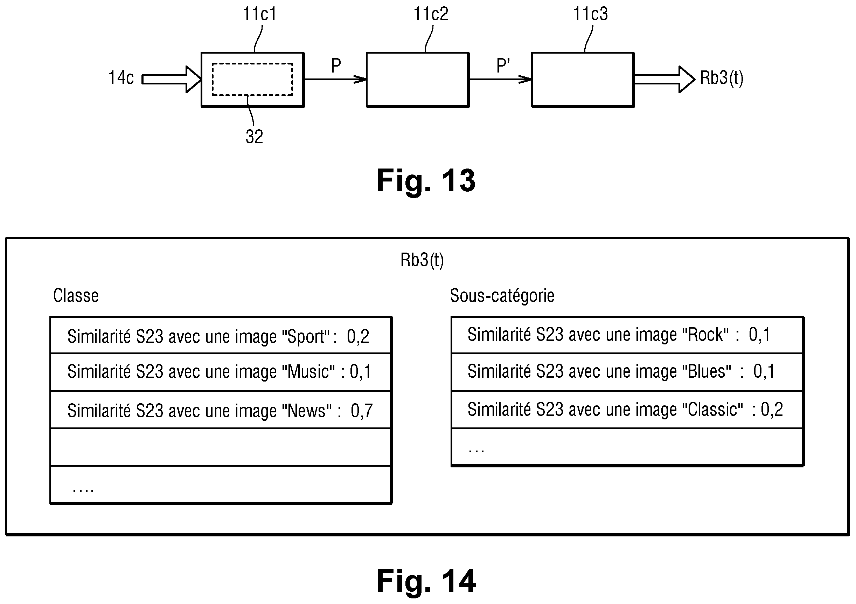

En référence à la figure 13, chaque image cible 14c (capture d'écran par exemple) est premièrement transformée en vecteur par le troisième modèle de classification 32 (sous-module 11c1). Ce vecteur est ensuite comparé aux vecteurs enregistrés dans l'une des mémoires 9 de l'unité de traitement 7 du boîter décodeur 1 (sous-module 11c2) pour construire la sortie R3b(t) (sous-module 11c3).

Selon ce mode de réalisation, si l'utilisateur regarde un match de football, une capture d'image décodée, ainsi que trois textes « *Sports Event* », « *Music Video* »*, « News Studio* » sont transmis au réseau, pour calculer les similarités entre la capture de l'image décodée et les trois textes. Il est possible d'utiliser plus d'un texte par catégorie, et donc au lieu d'utiliser « *Sports Event* », il est possible d'utiliser *Football Match, Basketball Match, F1 Race,* etc. Ces valeurs de similarités constitueront la suite Rb3(t), comme illustré dans le tableau de la figure 14. A nouveau, les sous-catégories (sous-genres) sont classifiées indépendamment de la classification des genres.

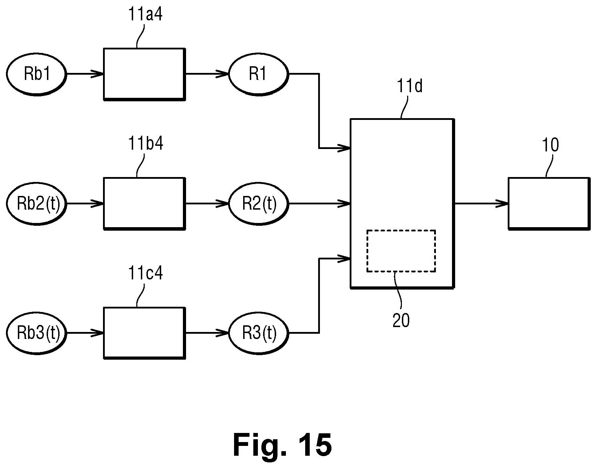

On a donc expliqué comment le module de paramétrage 11 obtient les estimations préliminaires du genre du flux audio-vidéo : Rb1, Rb2(t), Rb3(t). On s'intéresse maintenant, en référence à la figure 15, à la manière dont le module de paramétrage 11 détermine les estimations du genre à partir des estimations préliminaires du genre.

Comme déjà mentionné, la sortie Rb1 comporte les valeurs de similarité entre des expressions représentant les genres, et le texte construit à partir des métadonnées. Le sous-module 11a4 est configuré pour assimiler la première estimation du genre R1 au genre de l'expression possédant la plus grande valeur de similarité aux métadonnées.

Optionnellement, dans le cas où ce genre est « Musique », le sous-module 11a4 vérifie ensuite les similarités avec les sous-genres musicaux. Il applique la même logique pour trouver R1.

La sortie Rb2(t) du sous-module 11b comporte une liste de probabilité P' (« Musique », « Voix », « Silence ») ainsi qu'une valeur P'Sport.

Afin de trouver la valeur de la deuxième estimation de genre R2(t), le sous-module 11b4 applique les étapes suivantes :

1- Identifier la probabilité maximale entre « Musique », « Voix » et « Silence ».

2-S'il s'agit de « Musique », avec une probabilité supérieure à un seuil prédéterminé C1 (par exemple, C1 = 0.3), la valeur R2(t) sera « Musique ».

3- S'il s'agit de « Voix » avec $P'_{Voice} > C2$ (e.g. C2 = C1), le sous-module 11b4 vérifie la valeur $P'_{Sport}$.

    a. Si $P'_{Sport} > C3$ (e.g. C3=1), la valeur R2(t) sera « Sport »,
    b. Sinon R2(t) sera « Voix ».

4- Dans le cas où la plus grande valeur de probabilité est « Silence » le sous-module 11b4 vérifie $P'_{Sport}$.

    a. Si $P'_{Sport} > C3$, la valeur R2(t) sera « Sport »,
    b. Sinon, la valeur R2(t) = R2(t-1).

5- Sinon, R2(t) = Inconnue.

Le sous-module 11c4, qui permet de déterminer la troisième estimation du genre R3(t), correspond *mutatis mutandis* à celui mis en œuvre pour la classification du texte. La troisième estimation du genre R3(t) correspond à la classe avec la plus grande valeur de similarité.

Comme on vient de le voir, le module de paramétrage 11 a donc piloté trois analyses 18 (et réalisé entièrement la deuxième analyse 18b et la troisième analyse 18c), et a donc obtenu trois estimations du genre du flux audio-vidéo F (les valeurs R1, R2(t) et R3(t)).

Le module de paramétrage 11 met alors en œuvre l'algorithme de décision 20 pour définir le genre G du flux audio-vidéo d'entrée à partir de ces estimations.

C'est le sous-module 11d qui met en œuvre cet algorithme et qui prend la décision sur le genre du flux décodé sur le décodeur 11.

Cette prise de décision est faite en utilisant par exemple l'algorithme suivant, dont le but est de calculer un indice de confiance pour en déduire le genre G final du flux et donc le profil audio à envoyer vers le module de configuration 10 :

Initialisation : confiance = 0, R2Last=null
Algorithme :

```
        Si R2(t) == R2(t-1) et R2(t) != Inconnue alors confiance
    += α N
        Si R2(t) == R3(t) alors confiance += α M (M < N)
        Si R2(t) == R1 alors confiance += α E (E < M)
        R2Last = R2(t)
        Si R2(t) == Inconnue et R3(t) == R3(t-1) et R3(t) ==
    R2Last
        Si R3(t) == R1 alors confiance += α E (E < M)
        Sinon confiance = 0
        Si confiance > 0.95 alors G = R2(t) ou R2Last.
```

Ainsi, le module de paramétrage 11 réalise la deuxième analyse 18b (sur le signal audio 14b) et réalise et/ou pilote au moins une autre analyse sur une autre source de données (ici deux autres analyses : sur les métadonnées 14a et les images 14c). On voit que si la deuxième analyse 18b a pour résultat une estimation du genre qui demeure constante pendant une première durée prédéfinie, le module de paramétrage 11 confère au genre du flux audio-vidéo d'entrée, à l'issue de la première durée prédéfinie, la valeur de ladite estimation du genre quel que soit le résultat de la au moins une autre analyse.

En outre, si la deuxième analyse 18b a pour résultat une estimation du genre qui demeure constante pendant une deuxième durée prédéfinie inférieure à la première durée prédéfinie, et si l'estimation du genre produite par la au moins une autre analyse est identique à l'estimation du genre de la deuxième analyse pendant la deuxième durée prédéfinie, le module de paramétrage 11 confère au genre du flux audio-vidéo d'entrée, à l'issue de la deuxième durée prédéfinie, la valeur de ladite estimation du genre.

On voit donc que le signal audio est la source de données principale pour déterminer le genre du flux F, et que les autres sources viennent aider la prise de décision, et l'accélérer dans le cas où l'image et le texte correspondent à l'audio.

La prise en compte de plusieurs sources d'informations relatives au contenu audio diffusé permet donc bien une convergence plus rapide pour déterminer les paramètres audio à appliquer.

On note que la valeur α est inversement proportionnelle au temps pendant lequel la valeur « G » n'a pas changé. Ceci permet d'augmenter la stabilité du processus.

Optionnellement, une mesure de sécurité est mise en place pour éviter les changements fréquents de la valeur G du genre.

Selon un mode de réalisation, cette mesure correspond à l'algorithme suivant :

```
Init : stabilité = 10, stable = true.
Si G (t) == G (t-1) :
stabilité += 1
si stabilité >= 10 alors stabilité = 10
Sinon :
stabilité -= 3

 si stabilité < 0 alors stabilité = 0
 Si stable :
 Si stabilité < 4 alors stable = false
 Si ! stable :
 Si stabilité > 7 alors stable = true
```

Si stable alors G est la valeur à envoyer au module A3

Sinon, une valeur par défaut est envoyée au module A3, par exemple G=Music

On voit donc qu'une valeur de genre pour le flux est prise en compte seulement si cette valeur demeure constante pendant un certain temps (ou plus précisément, si le résultat d'un certain nombre consécutif d'analyses est constant). Sinon, une valeur par défaut pour le genre est utilisée.

Bien entendu, l'invention n'est pas limitée au mode de réalisation décrits mais englobe toute variante entrant dans le champ de l'invention tel que défini par les revendications.

Le flux d'entrée n'est pas nécessairement, comme on l'a vu, un flux audio-vidéo. Il peut s'agir d'un flux qui comprend uniquement un signal audio d'entrée. Dans ce cas, l'analyse ne porte pas sur les images mais uniquement sur le signal audio et éventuellement sur les métadonnées pour déterminer le genre du flux d'entrée.

L'invention peut être mise en œuvre dans un boîtier décodeur n'intégrant pas de dispositif de restitution audio (et donc pas de haut-parleur), mais qui est connecté à un ou des dispositifs de restitution audio externes (enceintes satellites, haut-parleurs du téléviseur, etc.). Dans ce cas, le module de configuration paramètre le(s)dit(s) dispositif(s) en lui(leur) transmettant des paramètres adaptés via les moyens de communication du boîtier décodeur.

Le système d'exploitation du boîtier décodeur n'est pas nécessairement *Android TV.*

Les genres du flux audio-vidéo d'entrée pourraient être différents de ceux décrits ici.

La troisième analyse pourrait être réalisée sur des vidéos (donc sur des séquences d'images successives), en utilisant un modèle adapté.

Les modèles de classification ne sont pas nécessairement pré-entraînés. Il serait possible d'utiliser, pour au moins l'un des modèles, un modèle de classification qui ne nécessite pas d'entraînement (classifieur algorithmique).

## Revendications

**1.** Boîtier décodeur (1), agencé pour diffuser un flux d'entrée (F) comprenant un signal audio d'entrée, le boîtier décodeur comportant une unité de traitement (7) dans laquelle sont mis en œuvre :

- un module de paramétrage (11) agencé pour réaliser en temps réel des analyses (18) sur au moins une source de données (14) relative au flux d'entrée, de manière à définir un genre du flux d'entrée, qui est associé à des paramètres audio ;

- un module de configuration (10), agencé pour adapter dynamiquement, en utilisant les paramètres audio, un réglage d'au moins un dispositif de restitution audio intégré dans ou connecté au boîtier décodeur et comprenant au moins un haut-parleur (4), de manière à optimiser un rendu sonore dudit dispositif de restitution audio en fonction du genre du flux d'entrée ;

- un module de contrôle (12), agencé pour détecter une survenue d'au moins un évènement courant (Ev) parmi un ensemble d'évènements prédéfinis, relatifs à la diffusion du flux d'entrée, et pour contrôler le module de paramétrage en fonction dudit évènement courant de manière à optimiser une utilisation de ressources du module de paramétrage (11) et donc du boîtier décodeur (1).

2. Boîtier décodeur selon la revendication 1, dans lequel, pour optimiser l'utilisation des ressources du module de paramétrage (11), le module de contrôle (12) est agencé pour contrôler une fréquence des analyses réalisées par le module de paramétrage.

3. Boîtier décodeur selon la revendication 2, dans lequel le module de paramétrage (11) est agencé pour exécuter des inférences d'au moins un modèle de classification (30, 31, 32), et dans lequel la fréquence des analyses est une fréquence d'exécution desdites inférences.

4. Boîtier décodeur selon l'une des revendications précédentes, dans lequel, pour optimiser l'utilisation des ressources du module de paramétrage (11), le module de contrôle (12) est agencé pour contrôler un taux d'utilisation d'un processeur (8) de l'unité de traitement (7), dans lequel est mis en œuvre le module de paramétrage.

5. Boîtier décodeur selon l'une des revendications précédentes, dans lequel l'ensemble d'évènements prédéfinis comprend au moins :

- une première transition, d'un état actif ou d'activation du flux d'entrée, vers un état inactif ou de désactivation, et/ou

- une deuxième transition, d'un état inactif ou de désactivation du flux d'entrée, vers un état actif ou d'activation, et/ou

- une troisième transition, d'un premier état actif, dans lequel le flux d'entrée contient un premier programme diffusé, à un deuxième état actif, dans lequel le flux d'entrée contient un deuxième programme diffusé.

6. Boîtier décodeur selon les revendications 2 et 5, dans lequel le module de contrôle (12) est agencé pour réduire la fréquence des analyses (18) réalisées par le module de paramétrage lorsque survient la première transition, et pour augmenter ladite fréquence lorsque survient la deuxième transition ou la troisième transition.

7. Boîtier décodeur selon la revendication 6, dans lequel le module de contrôle (12) stoppe les analyses (18) lorsque le flux d'entrée passe dans l'état inactif.

8. Boîtier décodeur selon les revendications 4 et 5, dans lequel le module de contrôle est agencé pour réduire une consigne du taux d'utilisation du processeur (9) lorsque survient la première transition, et pour augmenter ladite consigne lorsque survient la deuxième transition ou la troisième transition.

9. Boîtier décodeur selon la revendication 8, dans lequel le module de contrôle (12) confère une valeur nulle à ladite consigne lorsque le flux d'entrée passe dans l'état inactif.

10. Boîtier décodeur selon l'une des revendications précédentes, dans lequel le module de contrôle (12) est aussi agencé pour contrôler le module de paramétrage, de manière à optimiser une utilisation des ressources du module de paramétrage (11) et donc du boîtier décodeur (1), en fonction d'une convergence ou d'une divergence des analyses réalisées par le module de paramétrage (11).

11. Boîtier décodeur selon l'une des revendications précédentes, dans lequel, pour détecter la survenue de l'évènement courant, le module de contrôle (12) est agencé pour surveiller au moins une source d'informations (15), parmi un ensemble de sources d'informations prédéfinies comprenant un agrégateur de sessions média (15a) d'un système d'exploitation du boîtier décodeur, et/ou un guide électronique des programmes (15b), et/ou un pilote audio et/ou un pilote vidéo (15c) du boîtier décodeur (1).

**12.** Boîtier décodeur selon la revendication 11, dans lequel le module de contrôle (12) sélectionne au moins une source d'informations (15), pour détecter la survenue de l'évènement courant, en fonction d'une source du flux d'entrée (F).

**13.** Procédé de contrôle, mis en œuvre dans le module de contrôle (12) de l'unité de traitement (7) du boîtier décodeur (1) selon l'une des revendications précédentes, et comprenant les étapes de détecter une survenue d'au moins un évènement courant (Ev) parmi un ensemble d'évènements prédéfinis, relatifs à la diffusion du flux d'entrée, et de contrôler le module de paramétrage en fonction dudit évènement courant de manière à optimiser une utilisation de ressources du module de paramétrage (11) et donc du boîtier décodeur (1).

**14.** Programme d'ordinateur comprenant des instructions qui conduisent le module de contrôle (12) de l'unité de traitement (7) du boîtier décodeur (1) selon l'une des revendications 1 à 12 à exécuter les étapes du procédé de contrôle selon la revendication 13.

**15.** Support d'enregistrement lisible par ordinateur, sur lequel est enregistré le programme d'ordinateur selon la revendication 14.

**Fig. 1**

7

14
14a 14b 14c

15
15a 15b 15c

10

11

12

Set des paramètres

Configuration – Pc

**Fig. 2**

Fig. 3

15a   15b   15c

15

Ev

ED

12

12a

12b

12c

## Fig. 4

15a          15c          15b

| Système | Drivers | EPG |

15

Ecouter les évènements —12a

Oui — Contenu Lancé ? — Non —12b

| Augmenter le nombre d'inférences par seconde | Réduire le nombre d'inférences par seconde |

—12c

12

11

## Fig. 5

Fig. 6

Fig. 7

**12**

Configuration – Pc

E30

**11a**

Rb1

**14**

14a

14c

**11c**

Rb3(t)

14b

**11b**

Rb2(t)

11

**Fig. 8**

$$k = k1 + k2$$

**Fig. 9**

EP 4 664 901 A1

14a

Central Comedy Show (New)

(30 min) - Laugh out loud with hilarious stand-up routines

Rb1

Classe

| |
|---|
| Similarité S21a avec « A Sports Event » :  0,095 |
| Similarité S21a avec « A News Show » :  0,466 |
| Similarité S21a avec « A Talkshow » :  0,236 |
| |
| …. |

Sous-catégorie

| |
|---|
| Similarité S21a avec « Rock» :  0,9 |
| Similarité S21a avec « Blues» :  0,062 |
| Similarité S21a avec « Classic » :  0,38 |
| … |

**Fig. 10**

11b1          11b2          11b3

14b → | 31 | → P → | | → P' → | | → Rb2(t)

**Fig. 11**

Rb2(t)

| Classe | Sous-catégorie |
|---|---|
| P'Sport : 0,1 | P'2_rock : 0,1 |
| P'Voice : 0,7 | P2_classic : 0,6 |
| P'Music : 0,2 | P2_blues : 0,3 |
| | P2_Rnb/Pop : 0 |
| …. | |

**Fig. 12**

EP 4 664 901 A1

14c ⇒ | 11c1 [32] | →P→ | 11c2 | →P'→ | 11c3 | ⇒ Rb3(t)

**Fig. 13**

Rb3(t)

Classe

| Similarité S23 avec une image "Sport" :  0,2 |
| Similarité S23 avec une image "Music" : 0,1 |
| Similarité S23 avec une image "News" :  0,7 |
| |
| …. |

Sous-catégorie

| Similarité S23 avec une image "Rock" :  0,1 |
| Similarité S23 avec une image "Blues" :  0,1 |
| Similarité S23 avec une image "Classic"  : 0,2 |
| … |

**Fig. 14**

**Fig. 15**

Europäisches
Patentamt

European
Patent Office

Office européen
des brevets

# RAPPORT DE RECHERCHE EUROPEENNE

**Numéro de la demande**

EP 25 18 2181

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 2 916 557 A1 (SAMSUNG ELECTRONICS CO LTD [KR]) 9 septembre 2015 (2015-09-09) * alinéa [0014] - alinéa [0015] * * alinéa [0047] - alinéa [0050] * * alinéa [0064] - alinéa [0065] * * alinéa [0069] - alinéa [0071] * * alinéa [0073] * * alinéa [0094] - alinéa [0103] * ----- | 1-15 | INV. H04N21/439 H04N21/442 H04N21/443 H04N21/485  ADD. H04N21/44 |
| Y | US 2024/169960 A1 (JEFFREY MICHAEL [US] ET AL) 23 mai 2024 (2024-05-23) * alinéa [0037] * * alinéa [0042] - alinéa [0044] * * alinéa [0051] - alinéa [0061] * * alinéa [0066] * * alinéa [0090] - alinéa [0091] * * alinéa [0118] - alinéa [0121] * * alinéa [0140] - alinéa [0144] * * alinéa [0147] * * alinéa [0156] - alinéa [0158] * * alinéa [0178] * * alinéa [0209] * ----- | 1-15 | |
| A | US 2022/197588 A1 (LEI GUO [SG] ET AL) 23 juin 2022 (2022-06-23) * alinéa [0038] - alinéa [0039] * * alinéa [0048] * * alinéa [0050] - alinéa [0057] * * alinéa [0062] * ----- | 1-15 | DOMAINES TECHNIQUES RECHERCHES (IPC)  H04N |

Le présent rapport a été établi pour toutes les revendications

| Lieu de la recherche | Date d'achèvement de la recherche | Examinateur |
|---|---|---|
| La Haye | 3 juillet 2025 | Lefol, Damien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 18 2181

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-07-2025

| Document brevet cité au rapport de recherche | | Date de publication | Membre(s) de la famille de brevet(s) | | Date de publication |
|---|---|---|---|---|---|
| EP 2916557 | A1 | 09-09-2015 | EP | 2916557 A1 | 09-09-2015 |
| | | | KR | 20150104347 A | 15-09-2015 |
| | | | US | 2015256891 A1 | 10-09-2015 |
| US 2024169960 | A1 | 23-05-2024 | EP | 2541961 A2 | 02-01-2013 |
| | | | EP | 3598766 A1 | 22-01-2020 |
| | | | JP | 2013013092 A | 17-01-2013 |
| | | | US | 2013007201 A1 | 03-01-2013 |
| | | | US | 2016019876 A1 | 21-01-2016 |
| | | | US | 2019156799 A1 | 23-05-2019 |
| | | | US | 2020410966 A1 | 31-12-2020 |
| | | | US | 2022415290 A1 | 29-12-2022 |
| | | | US | 2024169960 A1 | 23-05-2024 |
| US 2022197588 | A1 | 23-06-2022 | AUCUN | | |

EPO FORM P0460

Pour tout renseignement concernant cette annexe : voir Journal Officiel de l'Office européen des brevets, No.12/82